**Europäisches Patentamt**

**European Patent Office**

**Office européen des brevets**

(19)

(11) **EP 1 077 442 A1**

(12) **DEMANDE DE BREVET EUROPEEN**

(43) Date de publication:
**21.02.2001 Bulletin 2001/08**

(51) Int. Cl.[7]: **G09G 3/20**

(21) Numéro de dépôt: **00202792.8**

(22) Date de dépôt: **08.08.2000**

(84) Etats contractants désignés:
**AT BE CH CY DE DK ES FI FR GB GR IE IT LI LU
MC NL PT SE**
Etats d'extension désignés:
**AL LT LV MK RO SI**

(30) Priorité: **17.08.1999 FR 9910560**

(71) Demandeur:
**Koninklijke Philips Electronics N.V.
5621 BA Eindhoven (NL)**

(72) Inventeur: **Ryon, David
75008 Paris (FR)**

(74) Mandataire:
**de la Fouchardière, Marie-Noelle
Société Civile "SPID"
156, Boulevard Haussmann
75008 Paris (FR)**

(54) **Ecran doté d'une zone d'affichage à geométrie variable**

(57) L'invention s'applique aux équipements électroniques à écran d'affichage. Pour gérer l'affichage d'images dans une zone d'écran de géométrie variable l'invention propose d'utiliser un contrôleur d'écran distinct du microprocesseur de l'équipement. Des informations relatives à la géométrie de la zone d'affichage sont stockées dans une mémoire de ce contrôleur d'écran. Elles sont utilisées par le contrôleur d'écran pour gérer l'affichage de façon à minimiser la consommation d'énergie.

Une application particulièrement importante de l'invention est l'affichage d'une image fixe sur l'écran d'un équipement électronique en veille. Dans ce cas le microprocesseur de l'équipement peut être désactivé.

FIG.3

EP 1 077 442 A1

**Description**

L'invention concerne un équipement électronique comportant un processeur, un écran, des moyens de contrôle d'écran pour commander l'affichage d'images dans une zone d'affichage de géométrie variable. Elle concerne également une méthode d'affichage d'images sur une zone d'affichage de géométrie variable d'un écran d'un équipement électronique à microprocesseur, ainsi qu'un contrôleur d'écran.

L'invention a d'importantes applications dans le domaine des équipements électroniques portables.

La demande de brevet n°2 319 878 déposée au Royaume Uni par la société Motorola le 23.10.1997 décrit un téléphone portable qui comporte un écran à cristaux liquides doté de deux modes de fonctionnement: un premier mode de fonctionnement dans lequel une image est générée sur seulement une zone partielle de l'écran qui peut être déplacée et dont la taille peut être modifiée, et un second mode de fonctionnement dans lequel une image est générée sur l'écran tout entier. Le premier mode de fonctionnement est utilisé lorsque le téléphone est en mode veille, ou lorsque le téléphone est actif mais que son couvercle est fermé. L'affichage sur l'écran est contrôlé par un circuit de contrôle qui fait partie du microprocesseur de l'équipement. Ce circuit de contrôle comporte notamment une mémoire d'image pour stocker des signaux de commande des points de l'image, un circuit de remplissage qui fournit des signaux d'extinction pour éteindre des points de l'image, et un circuit de commutation qui combine des signaux de commande fournis par la mémoire d'image, et des signaux d'extinction fournis par le circuit de remplissage, pour afficher une image dans une zone partielle de l'écran.

L'affichage sur une zone partielle de l'écran dans certains modes de fonctionnement de l'équipement permet de réaliser des économies d'énergie ce qui est très important dans le domaine des équipements électroniques portables tels que les téléphones. L'invention a pour but de proposer une autre solution pour afficher des images sur des zones d'écran de géométries variables, afin d'augmenter encore les économies d'énergie réalisées.

Pour cela, un équipement selon l'invention et tel que décrit dans le paragraphe introductif est caractérisé en ce que lesdits moyens de contrôle sont constitués par un circuit distinct dudit processeur, qui contient une mémoire pour stocker des informations relatives à la géométrie de ladite zone d'affichage.

Et une méthode d'affichage d'images selon l'invention, sur une zone d'affichage de géométrie variable d'un écran d'un équipement électronique à microprocesseur, est caractérisée en ce qu'elle consiste à utiliser un circuit distinct dudit processeur pour commander ledit affichage, et à stocker des informations relatives à la géométrie de ladite zone d'affichage dans une mémoire dudit circuit.

L'invention n'utilise pas le microprocesseur de l'équipement pour contrôler l'affichage sur l'écran d'une image préalablement enregistrée dans une mémoire d'image. En particulier l'invention permet, lorsque l'équipement est en veille, de désactiver le microprocesseur, et de continuer à afficher une image fixe dans une zone d'affichage dont la géométrie a été enregistrée dans la mémoire du circuit de contrôle. Une telle désactivation est une source importante d'économie d'énergie.

Dans un autre mode de réalisation intéressant, les moyens de contrôle comportent des moyens de rafraîchissement d'écran pour rafraîchir uniquement la zone d'affichage utilisée. Lorsque la zone d'affichage est de taille restreinte, il en résulte une économie d'énergie supplémentaire, puisque le nombre de lignes à parcourir est inférieur.

D'autres détails, caractéristiques et avantages de l'invention seront mis en évidence dans la description qui va suivre en regard des dessins annexés qui sont donnés à titre d'exemples non limitatifs et dans lesquels:

- la figure 1 est une représentation schématique d'un exemple d'équipement selon l'invention, qui contient notamment des moyens spécifiques de contrôle d'écran,
- la figure 2 est une vue détaillée desdits moyens spécifiques de contrôle d'écran,
- la figure 3 est un organigramme de fonctionnement d'un automate de contrôle d'écran selon l'invention,
- sur la figure 4 on a représenté un équipement électronique doté d'un écran, et une zone d'affichage sur cet écran.

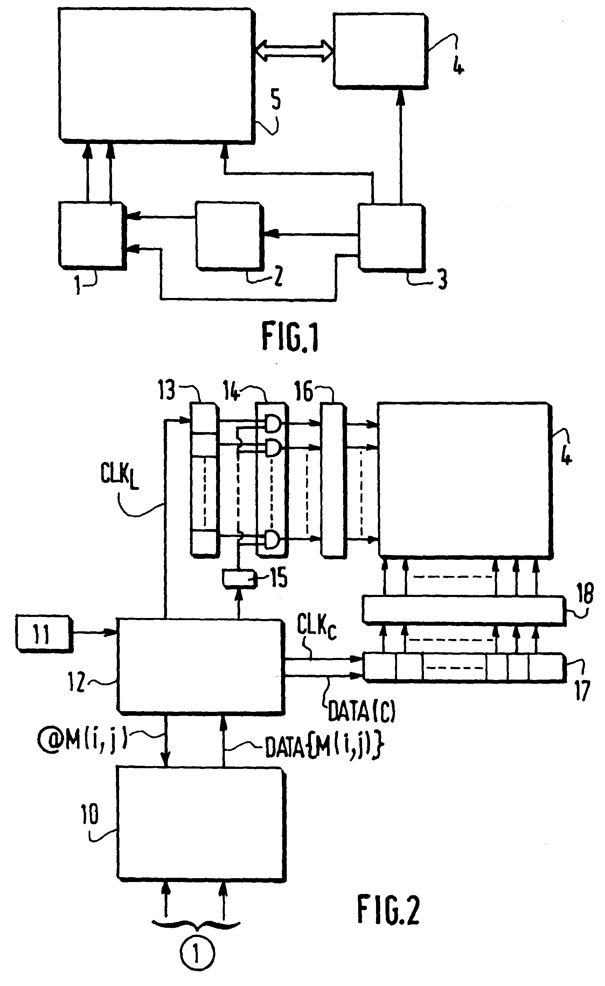

Sur la figure 1 on a représenté un schéma en blocs d'un équipement selon l'invention. Cet équipement comporte une unité centrale de traitement 1 (ou microprocesseur), de la mémoire 2 appelée mémoire système, une source d'alimentation 3, un écran 4, et une unité spécifique de contrôle d'écran 5 qui est distincte de l'unité centrale de traitement 1. L'unité centrale de traitement 1, la mémoire 2, l'écran 4 et l'unité spécifique de contrôle d'écran 5 sont alimentés par la source d'alimentation 3. L'unité centrale de traitement 1 fournit des données et des adresses à l'unité spécifique de contrôle d'écran 5. L'unité spécifique de contrôle d'écran 5 fournit à l'écran 4 des données à afficher.

Sur la figure 2, on a représenté un exemple d'unité spécifique de contrôle d'écran 5. Cette unité de contrôle d'écran comporte une mémoire d'écran double accès 10, une horloge interne 11, un automate 12, un registre circulaire 13, un ensemble 14 de portes logiques ET, un registre 15, un premier convertisseur de niveau 16, un registre à décalage 17 et un second convertisseur de niveau 18. Les convertisseurs de niveaux 16 et 18 ont pour fonction de convertir le niveau de tension des signaux stockés dans les registres 13 et 17, pour qu'ils soient utilisables par l'écran 4.

L'écran 4 est organisé en lignes et en colonnes de points (on note N le nombre de lignes et P le nombre de colonnes sur l'écran). La mémoire d'écran 10 contient des signaux d'activation / désactivation des lignes d'une part, et des signaux de commande des points d'autre part. Les signaux d'activation / désactivation des lignes sont utilisés pour définir une zone d'affichage sur l'écran. Les lignes actives constituent la zone d'affichage. Les lignes inactives sont inutilisées.

Pour les besoins de la description on utilise une représentation matricielle de ta mémoire 10: les signaux d'activation / désactivation constituent une première colonne d'une matrice $M(i,j)$ où $i=0$ à $N-1$ et $j=0$ à P, et les signaux de commandes de points constituent les P colonnes suivantes de la matrice $M(i,j)$. Dans la pratique, ces signaux sont par exemple stockés à des adresses successives dans la mémoire 10 lorsqu'on parcourt la matrice $M(i,j)$ ligne par ligne. Si l'on note @$M(i,j)$ l'adresse dans la mémoire 10 du point d'indice $(i,j)$ dans la matrice M, on a donc: @$M(i,j+1)$=@$M(i,j)+1$ et @$M(i+1,j)$=@$M(i,j)+P+1$ .

L'automate 12 génère à partir de l'horloge interne 11, un signal périodique de rafraîchissement d'écran $CLK_R$. Il génère également un signal d'écriture dans la mémoire circulaire 13 ($CLK_L$) et un signal d'écriture dans le registre à décalage 17 ($CLK_C$). Il accède à la mémoire 10 pour y lire les signaux d'activation / désactivation des lignes et les signaux de commande des points. Chaque signal d'activation / désactivation lu dans la mémoire 10 est stocké dans le registre 15. A partir des données lues dans la mémoire 10, du signal de rafraîchissement, et des signaux d'écriture dans les mémoires 13 et 17, l'automate 12 gère l'affichage sur l'écran 4, ligne par ligne. Pour chaque ligne, il commence par tester la valeur du signal d'activation / désactivation correspondant Si la ligne est inactive, il passe directement au traitement de la ligne suivante. L'automate ne lit et n'affiche donc que les données qui sont à l'intérieure de la zone d'affichage; en particulier seule la zone d'affichage est rafraîchie. Il en résulte une économie de temps et d'énergie.

La mémoire circulaire 13 contient autant d'emplacements qu'il y a de lignes sur l'écran. Chaque emplacement contient un bit appelé bit de ligne. Un seul des bits contenus dans la mémoire circulaire 13 a un niveau actif. Ce bit indique la ligne à afficher. Sur un front actif du signal d'écriture $CLK_L$, le bit de ligne de niveau actif est décalé d'un emplacement dans la mémoire circulaire 13.

La mémoire circulaire 13 est reliée au convertisseur de niveau 16 par l'intermédiaire de l'ensemble 14 de portes logiques ET de telle sorte que chaque emplacement de la mémoire circulaire 13 est associé à une porte logique ET. Chaque porte logique ET reçoit en entrée d'une part le bit contenu dans l'emplacement qui lui est associé, et d'autre part la valeur du signal d'activation / désactivation pour la ligne courante, qui est stockée dans le registre 15. La sortie de la porte ET est reliée au convertisseur de niveau 16. Ainsi, pour une ligne donnée, le contenu du registre à décalage 17 n'est affiché sur récran 4 que lorsque le bit de ligne et le signal d'activation / désactivation correspondants sont actifs.

Sur un front actif du signal d'écriture $CLK_C$, l'automate 12 inscrit, dans le registre à décalage 17, le signal de commande qui correspond à la ligne parcourue et à la cotonne courante. Lorsque le registre à décalage 17 a reçu tous les signaux de commande pour toutes les colonnes d'une ligne, un front actif est généré pour le signal d'écriture $CLK_L$ afin d'afficher la ligne correspondante.

De façon avantageuse le rapport cyclique du signal périodique de rafraîchissement d'écran est adapté au nombre de lignes actives, c'est-à-dire au nombre de ligne à rafraîchir.

Dans un mode de réalisation particulièrement important de l'invention, l'équipement est doté d'un mode de fonctionnement, appelé mode de fonctionnement en veille, dans lequel l'unité centrale de traitement est désactivée, et une image fixe est affichée dans une zone d'affichage 40 de taille restreinte par rapport à la taille de l'écran (figure 4). Par exemple pour un écran de 64 lignes et 100 colonnes, 10 lignes suffisent pour afficher une image fixe en mode veille. On économise alors $(64-10)*100$ accès à la mémoire 10 et à l'écran 4. L'image à afficher est inscrite dans la mémoire 10 par l'unité centrale 1. Ensuite, c'est l'unité 5 de contrôle d'écran qui gère l'affichage, et le rafraîchissement, à partir du contenu de la mémoire 10. L'unité centrale de traitement est alors désactivée, ce qui permet de réaliser des économies d'énergie importantes.

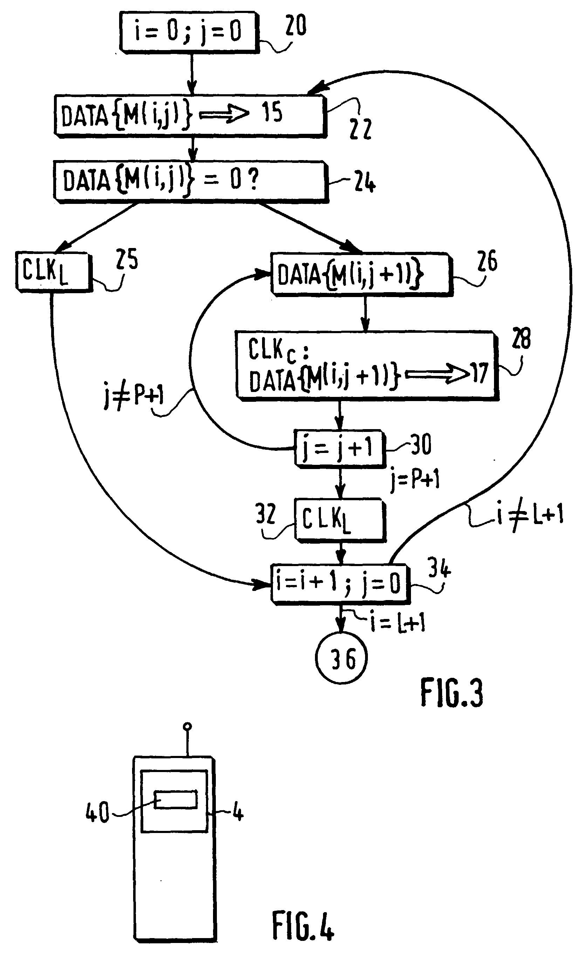

Sur la figure 3 on a résumé sous forme d'organigramme un exemple de fonctionnement de l'automate 12. A la case 20, un indice de ligne i et un indice de colonne j sont initialisés: $i=j=0$ . A la case 22, le signal d'activation / désactivation DATA{$M(i,j)$} stocké à l'adresse @$M(i,j)$ est lu et stocké dans la mémoire 15. A la case 24 ce signal DATA{$M(i,j)$} est testé. S'il est nul, la ligne courante est inactive. A la case 25, un front actif est généré pour le signal d'écriture $CLK_L$ afin de passer à la ligne suivante, et le fonctionnement se poursuit à la case 34. Sinon, la ligne est active et le fonctionnement continue à la case 26. A la case 26, la donnée DATA{$M(i,j+1)$} stockée à l'adresse @$M(i,j)+1$ est lue. A la case 28, un front actif est généré pour le signal d'écriture $CLK_C$ afin d'inscrire cette donnée DATA{$M(i,j+1)$} dans le registre à décalage 17. A la case 30, la variable j est incrémentée d'une unité ( $j=j+1$ ). Les opérations décrites aux cases 26, 28 et 30 sont répétées jusqu'à ce que $j=P+1$ . Lorsque $j=P+1$ un front actif est généré pour le signal d'écriture $CLK_L$ afin d'afficher le contenu du registre 17 sur l'écran (case 32). Puis à la case 34, la variable i est incrémentée d'une unité ( $i=i+1$ ), et la variable j est réinitialisée ($j=0$). Le fonctionnement décrit aux cases 22 à 34 est répété jusqu'à ce que i=N . Lorsque i=N le fonctionnement se termine à la case 36. Le fonctionnement qui vient d'être décrit aux cases 20 à 36 est répété à la fréquence du signal de rafraîchissement pour rafraîchir l'écran.

L'automate 12 peut être réalisé de façon classique à partir de composants tels que des compteurs, des bascules et des fonctions logiques.

Dans le mode de réalisation qui vient d'être décrit en référence aux figures 2 et 3, seules les lignes sont susceptibles d'être désactivées. La description qui a été faite peut être modifiée de façon évidente pour permettre de désactiver des colonnes, à la place des lignes ou en plus des lignes.

Par ailleurs dans l'exemple décrit l'information relative à l'activation / la désactivation des lignes est donnée par l'unité centrale de traitement. Dans un autre mode de réalisation plus complexe, cette information est élaborée par l'unité de contrôle d'écran elle-même, après un premier passage sur l'écran complet.

Enfin, dans le mode de réalisation décrit, l'automate 12 est intégré dans l'unité de contrôle d'écran, ainsi que la mémoire d'image 10. Ceci est avantageux dans le cas où l'écran est un petit écran (comportant un nombre de points inférieur à 100*65 par exemple). Pour les écrans de taille supérieure, la mémoire d'image n'est en général pas intégrée dans l'unité de contrôle d'écran. Dans ce cas l'automate n'est pas non plus nécessairement intégré dans l'unité de contrôle d'écran.

## Revendications

1. Equipement électronique comportant un processeur, un écran, des moyens de contrôle d'écran pour commander l'affichage d'images dans une zone d'affichage de géométrie variable, caractérisé en ce que lesdits moyens de contrôle sont constitués par un circuit distinct dudit processeur, qui contient une mémoire pour stocker des informations relatives à la géométrie de ladite zone d'affichage.

2. Equipement selon la revendication 1, caractérisé en ce que ledit équipement comporte des moyens pour désactiver ledit processeur dans au moins un mode de fonctionnement.

3. Equipement selon la revendication 2, caractérisé en ce que dans ledit mode de fonctionnement une image fixe est affichée sur une zone d'affichage de taille restreinte.

4. Equipement selon la revendication 1, caractérisé en ce que ledit écran étant organisé en lignes et en colonnes de points, ladite mémoire contient des signaux d'activation / désactivation desdites lignes et desdites colonnes qui constituent les informations relatives à la géométrie de ladite zone d'affichage, et des signaux de commande desdits points.

5. Equipement selon la revendication 1, caractérisé en ce que lesdits moyens de contrôle comportent des moyens de rafraîchissement d'écran pour rafraîchir uniquement ladite zone d'affichage.

6. Méthode d'affichage d'images sur une zone d'affichage de géométrie variable d'un écran d'un équipement électronique à microprocesseur, caractérisée en ce qu'elle consiste à utiliser un circuit de contrôle distinct dudit processeur pour commander ledit affichage, et à stocker des informations relatives à la géométrie de ladite zone d'affichage dans une mémoire dudit circuit.

7. Méthode d'affichage selon la revendication 6, caractérisée en ce qu'elle comporte une étape de désactivation du microprocesseur dans au moins un mode de fonctionnement de l'équipement.

8. Méthode d'affichage selon la revendication 6 sur un écran organisé en lignes et en colonnes de points, caractérisée en ce que les informations relatives à ta géométrie de ladite zone d'affichage sont constituées par des signaux d'activation / désactivation desdites lignes et desdites colonnes.

9. Méthode d'affichage selon la revendication 6, caractérisée en ce qu'elle comporte une étape de rafraîchissement d'écran pour rafraîchir uniquement ladite zone d'affichage.

10. Contrôleur d'écran, caractérisé en ce qu'il comporte un automate pour commander l'affichage d'images dans une zone d'affichage de géométrie variable dudit écran, et une mémoire pour stocker des informations relatives à la géométrie de ladite zone d'affichage.

## FIG.1

CLK_L

@M(i,j)

DATA{M(i,j)}

CLK_C

DATA(C)

## FIG.2

FIG.3

FIG.4

**Office européen des brevets**

**RAPPORT DE RECHERCHE EUROPEENNE**

Numéro de la demande

EP 00 20 2792

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X<br><br>A | EP 0 811 866 A (SEIKO EPSON CORP)<br>10 décembre 1997 (1997-12-10)<br>* abrégé *<br>* colonne 2, ligne 3 - colonne 7, ligne 23 *<br>* colonne 17, ligne 55 - colonne 18, ligne 49 *<br>* colonne 22, ligne 51 - colonne 25, ligne 6 *<br>* colonne 29, ligne 9 - colonne 30, ligne 12 *<br>* figures 17,18,25,27,28,31,33,39,40 *<br>--- | 1,4-6,<br>8-10<br>2,3,7 | G09G3/20 |
| A | US 5 592 194 A (NISHIKAWA FUMITAKA)<br>7 janvier 1997 (1997-01-07)<br>* abrégé *<br>* colonne 1, ligne 56 - ligne 67 *<br>* colonne 2, ligne 22 - colonne 6, ligne 10 *<br>* figures 1-4,8 *<br>--- | 1-10 | |
| A | EP 0 844 600 A (SEIKO INSTR INC)<br>27 mai 1998 (1998-05-27)<br>* abrégé *<br>* page 4, ligne 1 - ligne 11 *<br>* figure 2 *<br>--- | 1-10 | **DOMAINES TECHNIQUES RECHERCHES (Int.Cl.7)**<br><br>G09G<br>H04M |
| D,A | GB 2 319 878 A (MOTOROLA INC)<br>3 juin 1998 (1998-06-03)<br>* abrégé *<br>* page 2, ligne 21 - page 14, ligne 22 *<br>* figures 3-5 *<br>---<br>-/-- | 1-10 | |

Le présent rapport a été établi pour toutes les revendications

| Lieu de la recherche | Date d'achèvement de la recherche | Examinateur |
|---|---|---|
| LA HAYE | 11 décembre 2000 | Van Roost, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen des brevets**

## RAPPORT DE RECHERCHE EUROPEENNE

Numéro de la demande

EP 00 20 2792

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 474 231 A (CANON KK) 11 mars 1992 (1992-03-11) * abrégé * * page 2, ligne 34 - page 3, ligne 16 * * page 3, ligne 52 - page 4, ligne 58 * * page 6, ligne 50 - page 8, ligne 17 * * page 11, ligne 24 - ligne 54 * * figures 1,7,8,15 * ----- | 1-10 | |
| | | | **DOMAINES TECHNIQUES RECHERCHES (Int.Cl.7)** |

Le présent rapport a été établi pour toutes les revendications

| Lieu de la recherche | Date d'achèvement de la recherche | Examinateur |
|---|---|---|
| LA HAYE | 11 décembre 2000 | Van Roost, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 00 20 2792

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

11-12-2000

| Document brevet cité au rapport de recherche | Date de publication | Membre(s) de la famille de brevet(s) | | Date de publication |
|---|---|---|---|---|
| EP 0811866 A | 10-12-1997 | WO | 9722036 A | 19-06-1997 |
| US 5592194 A | 07-01-1997 | JP | 2034894 A | 05-02-1990 |
| | | GB | 2237713 A,B | 08-05-1991 |
| | | HK | 171795 A | 17-11-1995 |
| | | WO | 8910609 A | 02-11-1989 |
| | | KR | 9708783 B | 29-05-1997 |
| EP 0844600 A | 27-05-1998 | JP | 10207438 A | 07-08-1998 |
| | | CN | 1191324 A | 26-08-1998 |
| GB 2319878 A | 03-06-1998 | US | 5867140 A | 02-02-1999 |
| | | DE | 19751139 A | 04-06-1998 |
| | | FR | 2756404 A | 29-05-1998 |
| | | JP | 10187106 A | 14-07-1998 |
| EP 0474231 A | 11-03-1992 | JP | 2744841 B | 28-04-1998 |
| | | JP | 4115288 A | 16-04-1992 |
| | | JP | 2760902 B | 04-06-1998 |
| | | JP | 4219816 A | 10-08-1992 |
| | | DE | 69123407 D | 16-01-1997 |
| | | DE | 69123407 T | 30-04-1997 |
| | | US | 5394166 A | 28-02-1995 |

EPO FORM P0460

Pour tout renseignement concernant cette annexe : voir Journal Officiel de l'Office européen des brevets, No.12/82